# EUROPEAN PATENT SPECIFICATION

(11) **EP 2 944 669 B1**
(45) Date of publication and mention of the grant of the patent: **02.11.2016**
(21) Application number: 15167340.7
(22) Date of filing: 12.05.2015
(51) Int. Cl.: C08K 3/00, C08K 3/04, C08K 3/22, C08K 3/36

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEU

(30) Priority: 15.05.2014 JP 2014101566; 30.04.2015 JP 2015093110
(43) Date of publication of application: 18.11.2015
(73) Proprietor: Sumitomo Rubber Industries, Ltd., Kobe-shi, Hyogo 651 (JP)
(72) Inventor: Miyazaki, Tatsuya, Kobe-shi, Hyogo 651-0072 (JP)
(74) Representative: TBK

(56) References cited:
- EP-A1- 1 048 691
- EP-A1- 1 518 895

## Description

### Field of the Invention

The present invention relates to a rubber composition, and to a pneumatic tire with a tread produced by using the rubber composition.

### Background Art

A pneumatic tire is structured with various members such as a tread and sidewalls, and diverse performances are assigned respectively to those members. For reasons of safety and the like, capabilities such as excellent wet grip performance are required for a tread that makes contact with a road surface, and adding aluminum hydroxide has been proposed in response to such a requirement. However, adding aluminum hydroxide may result in a decrease in wear resistance or tensile strength. Thus, such a method is less likely to be employed for producing tires for public road transportation.

Also, to enhance wet grip performance, there are other methods such as increasing the amounts of styrene and vinyl when solution-polymerizing styrene-butadiene rubber, controlling a tangent δ curve by using modified solution-polymerized styrene-butadiene rubber, setting a higher peak in a tangent δ curve by increasing the silica amount, and adding grip resin.
However, it is difficult to improve wet grip performance while maintaining other physical properties.

Patent publication 1 discloses a method for enhancing wet grip performance, wear resistance and processability by using a particular rubber component or a particular inorganic reinforcement agent such as aluminum hydroxide. However, further improvements are still necessary to enhance both wet grip performance and wear resistance. Moreover, well-balanced improvements including that of tensile strength are also required.

### PRIOR ART PUBLICATION

### PATENT PUBLICATION

Patent publication 1: Japanese Patent No. 4559573

### SUMMARY OF THE INVENTION

### PROBLEMS TO BE SOLVED BY THE INVENTION

The objective of the present invention is to solve the above-mentioned problems by providing a rubber composition capable of making well-balanced improvements to wet grip performance, wear resistance and tensile strength, and to provide a pneumatic tire having a tread produced using such a rubber composition.

### SOLUTIONS TO THE PROBLEMS

One aspect of the present invention is a rubber composition containing a rubber component made of an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10~60 mass% and a weight-average molecular weight of 800,000 or greater;
an inorganic reinforcement agent represented by the formula below and having a nitrogen adsorption specific surface area of 10~60 m²/g; and
silica having a nitrogen adsorption specific surface area of 100 m²/g or greater and/or carbon black having a nitrogen adsorption specific surface area of 100 m²/g or greater. The oil-extended butadiene rubber is synthesized using a rare-earth element-based catalyst. The total content of the oil-extended butadiene rubber and the styrene-butadiene rubber is 10~100 mass% of the rubber component. Based on 100 parts by mass of the rubber component, the content of the inorganic reinforcement agent is 1~70 parts by mass, and the total content of the silica and carbon black is at least 50 parts by mass.

mM·xSiO_{y}·zH₂O

(in the formula, "M" represents at least one metal selected from the group consisting of Al, Mg, Ti, Ca, Zr, an oxide of the metal thereof and a hydroxide of the metal thereof, "m" is a whole number of 1~5, "x" is a whole number of 0~10, "y" is a whole number of 2-5, and "z" is a whole number of 0~10)

In the rubber composition related to the present invention, the inorganic reinforcement agent is preferred to be aluminum hydroxide.

The rubber composition related to the present invention is preferred to be produced by kneading at least the rubber component and the aluminum hydroxide at a discharge temperature of 150°C or higher.

In the rubber composition related to the present invention, it is preferred that the weight-average molecular weight of the oil-extended butadiene rubber be set at 700,000 or greater and/or the weight-average molecular weight of the styrene-butadiene rubber be set at 1,000,000 or greater.

In the rubber composition related to the present invention, it is preferred that the nitrogen adsorption specific surface area of the silica be 160 m²/g or greater and the nitrogen adsorption specific surface area of the carbon black be 140 m²/g or greater, and the total content of the silica and the carbon black be at least 60 parts by mass based on 100 parts by mass of the rubber component.

In the rubber composition related to the present invention, to enhance grip performance, wear resistance and tensile strength while maintaining the predetermined hardness of a tire, and to make it easier to add a distributed torque to the filler and inorganic filler during the kneading process,
the amount of process oil to be further added is preferred to be 14 parts by mass or less based on 100 parts by mass. Process oil and grip resin are each classified as a softening agent and are used to facilitate processability and dispersibility. However, if their total amount is too large, the rubber hardness (=E^{ε}) will decrease.

The rubber composition related to the present invention is preferred to be used for a tire tread.

Another aspect of the present invention is a pneumatic tire having the tread produced using the rubber composition of the present invention.

### EFFECTS OF THE INVENTION

The rubber composition related to the present invention is produced by combining the predetermined amounts of a specific rubber component, a particular inorganic reinforcement agent having a predetermined nitrogen adsorption specific surface area, and silica and/or carbon black having a particular nitrogen adsorption specific surface area. Accordingly, a pneumatic tire having a tread produced by using such a rubber composition makes well-balanced improvements to wet grip performance, wear resistance and tensile strength.

### BRIEF DESCRIPTION OF THE DRAWINGS

FIG. 1: views of reactions that occur in aluminum and silica during the kneading or vulcanization of rubber or instantaneous reactions that occur between the aluminum hydroxide on the tire surface and the silica on a road surface;
FIG. 2: views of examples schematically showing dispersed polymers; and
FIG. 3: an imaging view of a differential scanning calorimetry thermal analysis curve of aluminum hydroxide.

### DETAILED DESCRIPTION OF THE EMBODIMENTS

The rubber composition according to an embodiment of the present invention is produced by combining a specific rubber component, a particular inorganic reinforcement agent having a predetermined nitrogen adsorption specific surface area, and silica and/or carbon black having a particular nitrogen adsorption specific surface area.

By adding an inorganic reinforcement agent such as aluminum hydroxide having a particular nitrogen adsorption specific surface area, wet grip performance is improved. That is thought to be because of the following effects (1)~(3).

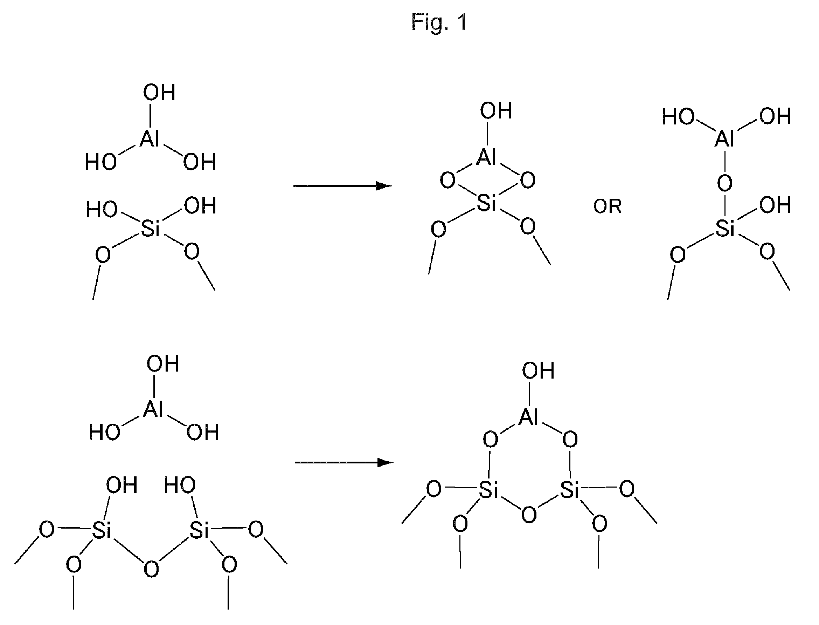

(1) During a kneading process, if part of the added inorganic reinforcement agent such as aluminum hydroxide (Al(OH)₃) is converted to alumina (Al₂O₃) with a Mohs hardness greater than that of silica, or if an inorganic reinforcement agent such as aluminum hydroxide is bonded with silica (covalent bond or dehydration synthesis) and is immobilized in the rubber by dispersed silica chains, it is thought that the metal hydroxide lump and inorganic reinforcement agent exhibit anchoring effects on the microscopic roughness on the aggregate of the road surface (at a pitch of scores of microns) to enhance wet grip performance.
(2) When silicon dioxide on a road surface makes contact with (abrades) an inorganic reinforcement agent such as aluminum hydroxide on the tire surface, an instantaneous covalent bond as shown in FIG. 1 is formed to enhance grip performance.
(3) On a wet road surface, portions of a tire surface make contact with the road surface through a water screen. Usually, it is thought that such a water screen evaporates by the frictional heat generated at the portions where the tire makes direct contact with the road surface. However, if aluminum hydroxide is contained, evaporation of a water screen (water content) by the frictional heat is thought to be suppressed because of endothermic reactions such as "Al(OH)₃→1/2 Al₂O₃+3/2 H₂O" that have progressed in the aluminum hydroxide on the tire surface. If a water screen evaporates, spaces are formed between the tire surface and the road surface, reducing the contact area between the tire and the road. As a result, wet grip performance decreases.

In a conventional method of adding inorganic reinforcement agents such as aluminum hydroxide, wet grip performance is improved, but wear resistance and tensile strength are usually lowered. It is difficult to make balanced improvements to those features. In the present embodiment, since an inorganic reinforcement agent such as aluminum hydroxide with a predetermined nitrogen adsorption specific surface area is added, a decrease in wear resistance or tensile strength is suppressed while wet grip performance is enhanced. As a result, balanced improvements are made in those properties. In addition to a certain inorganic reinforcement agent, a specific rubber component is used in the present embodiment. Thus, wear resistance and tensile strength are also improved significantly. Accordingly, combined effects of improved wet grip performance, wear resistance and tensile strength, even including cut and chip resistance, are significant.

As a rubber component, the rubber composition related to the present embodiment contains an oil-extended butadiene rubber having a cis content of 95 mol% or greater, a vinyl content of 1.2 mol% or less and a weight-average molecular weight of 530,000 or greater (hereinafter also referred to as a "high-molecular-weight oil-extended BR"), and/or a styrene-butadiene rubber having a bound styrene content of 10~60 mass% and a weight-average molecular weight of 800,000 or greater (hereinafter also referred to as a "high-molecular-weight SBR"). By combining such a specific rubber component and an inorganic reinforcement agent such as aluminum hydroxide with a predetermined nitrogen adsorption specific surface area, well-balanced improvements are made to wet grip performance, wear resistance and tensile strength.

The above high-molecular-weight oil-extended BR and high-molecular-weight SBR may be used alone or in combination thereof. When both the high-molecular-weight oil-extended BR and high-molecular-weight SBR are used, wear resistance is significantly improved while excellent low fuel consumption and wet grip performance are maintained. Thus, an increase in cost is suppressed while the balance in those properties is improved. In addition, durability such as excellent chip resistance is also achieved.

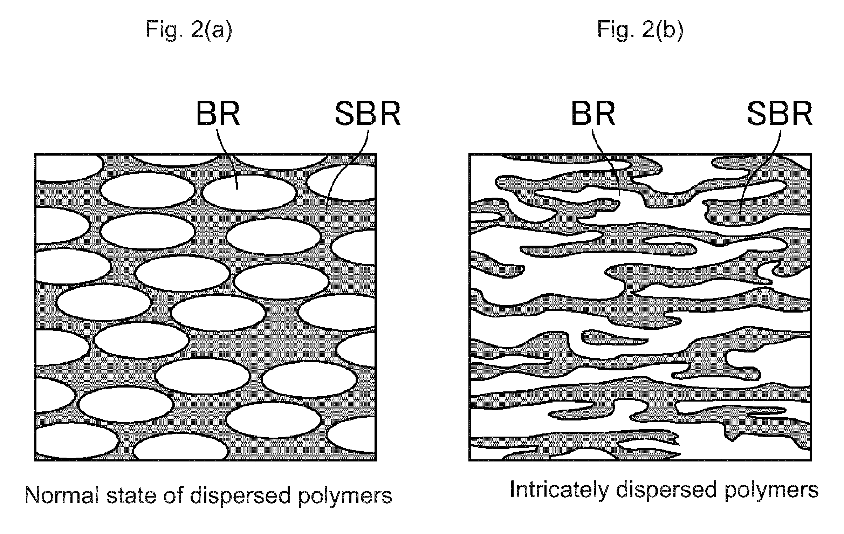

It is not so clear why the performance balance and durability are improved. Butadiene rubber is softer when a specific high-molecular-weight oil-extended BR is used, and polymer chains are less likely to be cut when a high-molecular-weight styrene-butadiene rubber is used. Because of those effects, the butadiene phase and the styrene-butadiene phase make a complex mixed phase, as shown in FIG. 2b. As a result, quite a few silica particles are distributed in the butadiene phase where silica particles are usually hard to mix in, and quite a few carbon black particles are distributed in the styrene-butadiene phase where carbon black particles are usually hard to mix in. Accordingly, both fillers are thought to be evenly mixed in and dispersed in both rubber phases, thereby improving various properties.

In the present application, an oil-extended butadiene rubber means a rubber obtained by adding an oil or the like as an extender oil to a butadiene rubber at the time a polymer is produced.

The cis content of the high-molecular-weight oil-extended BR is 95 mol% or greater, preferably 97 mol% or greater. If it is less than 95 mol%, excellent wear resistance and durability are unlikely to be achieved. The upper limit of the cis content is not limited specifically, and it may be 100 mol%.

The vinyl content in the high-molecular-weight oil-extended BR is 1.2 mol% or less, preferably 1.0 mol% or less. If it exceeds 1.2 mol%, wear resistance and durability may decrease. The lower limit of the vinyl content is not limited specifically, and it may be 0 mol%.

The weight-average molecular weight (Mw) of the high-molecular-weight oil-extended BR is 530,000 or greater, preferably 600,000 or greater, more preferably 700,000 or greater. The upper limit of the Mw is not limited specifically, but it is preferred to be 1,000,000 or less, more preferably 950,000 or less. If it is less than 530,000, wear resistance and durability may be insufficient. If it exceeds 1,000,000, polymers are hard to disperse, while fillers are hard to mix in. Accordingly, durability tends to decrease.

The high-molecular-weight oil-extended BR is synthesized by a known method, using a rare-earth element-based catalyst.

Any known rare-earth element-based catalyst may be used. Examples are catalysts containing lanthanide rare-earth element compounds, organic aluminum compounds, aluminoxanes, halogen-containing compounds, and Lewis bases, if necessary. Among those, especially preferred is a neodymium (Nd)-based catalyst using an Nd-containing compound as a lanthanide rare-earth element compound.

Examples of lanthanide rare-earth element compounds are halides of rare-earth metals having an atomic number of 57~71, carboxylates, alcoholates, thioalcoholates, amides or the like. Especially, use of an Nd-based catalyst is preferred to obtain a BR containing a high cis content and a low vinyl content as described above.

Examples of the extender oil in the high-molecular-weight oil-extended BR are paraffin oil, aromatic oil, naphthenic oil, mild extraction solvate (MES), treated distillate aromatic extract (TDAE), solvent residual aromatic extract (S-RAE) and the like. Especially, MES and TDAE are preferred. To enhance wear resistance and grip performance, a TDAE is especially preferred. In addition, to enhance grip performance on ice, an MES with a low glass transition temperature (Tg) is preferred.

The amount of extender oil in the high-molecular-weight oil-extended BR, namely, the amount of extender oil in 100 parts by mass of the butadiene component, is not limited specifically, and may be set properly. It is usually 5~100 parts by mass, preferably 10~50 parts by mass.

Examples of the high-molecular-weight oil-extended BR are those prepared with a rare-earth based catalyst by a conventionally known method, or commercially available products such as BUNA CB 29 TDAE made by LANXESS (a rare-earth based BR synthesized using an Nd-based catalyst, a TDAE content of 37.5 parts by mass based on 100 parts by mass of the rubber component, a cis content of 95.8 mol%, a vinyl content of 0.4 mol%, Mw: 760,000), and BUNA CB 24 MES made by LANXESS (a rare-earth based BR synthesized using an Nd-based catalyst, an MES content of 37.5 parts by mass based on 100 parts by mass of the rubber component, a cis content of 96.1 mol%, a vinyl content of 0.4 mol%, Mw: 737,000).

The bound styrene content in the high-molecular-weight SBR is 10 mass% or greater, preferably 30 mass% or greater, more preferably 34 mass% or greater. In addition, the bound styrene content is 60 mass% or less, preferably 50 mass% or less, more preferably 46 mass% or less. If the bound styrene content is less than 10 mass%, wet grip performance may be insufficient. If it exceeds 60 mass%, dispersion of polymers is hard to obtain and fuel efficiency may be lowered.

The weight-average molecular weight (Mw) of the high-molecular-weight SBR is 800,000 or greater, preferably 900,000 or greater, more preferably 1,000,000 or greater. On the other hand, the upper limit of the Mw is not limited specifically, but it is preferred to be 1,500,000 or less, more preferably 1,300,000 or less. If it is less than 800,000, wear resistance may decrease, and if it exceeds 1,500,000, polymers are hard to disperse, while fillers are hard to mix in. Accordingly, fuel efficiency may be lowered.

The vinyl content in the high-molecular-weight SBR is preferred to be 5 mol% or greater, more preferably 10 mol% or greater, even more preferably 15 mol% or greater. In addition, the vinyl content is preferred to be 60 mol% or less, more preferably 50 mol% or less. If the vinyl content is within such a range, excellent effects of the present invention are achieved.

The high-molecular-weight SBR is not limited specifically. Examples are emulsion-polymerized SBRs (E-SBRs), solution-polymerized SBRs (S-SBRs) or the like. It may be oil extended or non-oil extended. Among those, to enhance wear resistance, oil-extended E-SBRs are preferred. Alternatively, oil-extended silica-modified SBRs (oil-extended SBRs in which the terminals or main chains of a polymer are modified by various modifiers) may also be used.

The oil-extended SBR is an SBR obtained by adding an oil or the like as an oil extender to a styrene-butadiene rubber at the time polymers are produced. Examples of the oil extender are the same as those used for the high-molecular-weight oil-extended BR as listed above. Especially, aromatic oils, TDAE, naphthenic oils and MES are preferred.

The content of the oil extender in the oil-extended SBR, namely, the amount of an oil extender based on 100 parts by mass of styrene-butadiene rubber, is not limited specifically and may be set properly. It is usually 5~100 parts by mass, preferably 10~50 parts by mass.

The high-molecular-weight SBR is prepared by known methods such as anion polymerization, solution polymerization and emulsion polymerization. Commercially available products may also be used. Examples of commercially available products are Nipol 9548 made by Zeon Corporation, 0122 made by JSR Corporation, and the like.

In the present application, the cis content (per cis-1,4-bound butadiene unit) and the vinyl content (per 1,2-bound butadiene unit) in BR, and the vinyl content in SBR are determined by infrared absorption spectrum analysis or the like, and the bound styrene content of the SBR is determined by H¹-NMR. Weight-average molecular weights (Mw) of BR and SBR are obtained by the method shown in the examples.

The total content of the high-molecular-weight oil-extended BR and the high-molecular- weight SBR in the rubber component is 10 mass% or greater, preferably 12 mass% or greater. If it is less than 10 mass%, wear resistance and tensile strength decrease. The upper limit is not limited specifically, and the content may be 100 mass%. The content of the high-molecular-weight oil-extended BR indicates the solid rubber content, namely, the content of the butadiene rubber component. In the same manner, when an oil-extended SBR is used as the high-molecular-weight SBR, it means the amount of the styrene-butadiene rubber component contained therein.

When the high-molecular-weight oil-extended BR and the high-molecular-weight SBR are both used, the ratio of combining the high-molecular-weight oil-extended BR and the high-molecular-weight SBR (BR solid component mass/SBR solid component mass) is preferred to be 10/90~80/20, more preferably 12/88~70/30, even more preferably 15/85~67/33. If the combination ratio is less than 10/90 or exceeds 80/20, effects obtained from combining both rubbers tend not to be fully achieved. When it is a tire for light trucks, since high pressures at the contact surface per unit area automatically bring high wet grip performance, the SBR content can be relatively small.

The rubber composition of the present embodiment may contain a rubber component other than the high-molecular-weight oil-extended BR and high-molecular-weight SBR.

Examples of other rubber components are butadiene rubbers excluding the high-molecular-weight oil-extended BRs (non-oil-extended BRs), styrene-butadiene rubbers (SBRs) excluding the high-molecular-weight SBRs, isoprene-based rubbers such as natural rubbers (NRs) and isoprene rubbers (IRs), diene-based rubbers such as styrene-isoprene-butadiene rubbers (SIBRs), chloroprene rubbers (CRs), acrylonitrile-butadiene rubbers (NBRs), and the like.

The rubber composition of the present embodiment contains an inorganic reinforcement agent represented by the formula below and has a particular nitrogen adsorption specific surface area.

mM·xSiO_{y}·zH₂O

(in the formula, "M" represents at least one metal selected from the group consisting of Al, Mg, Ti, Ca, Zr, an oxide of the metal thereof and a hydroxide of the metal thereof, "m" is a whole number of 1~5, "x" is a whole number of 0~10, "y" is a whole number of 2~5, and "z" is a whole number of 0~10)

Examples of the inorganic reinforcement agent are alumina, alumina hydrate, aluminum hydroxide, magnesium hydroxide, magnesium oxide, talc, titanium white, titanium black, calcium oxide, calcium hydroxide, aluminum-magnesium oxide, clay, pyrophyllite, bentonite, aluminum silicate, magnesium silicate, calcium silicate, aluminum-calcium silicate, zirconium, zirconium oxide and the like. They may be used alone or in combination of two or more. Especially, an inorganic reinforcement agent having Al or Zr as a metal "M", more preferably aluminum hydroxide or zirconium hydroxide, is preferred, since an oxide film formed when Al or Zr makes contact with air generates scratching effects and enhances wet grip performance accordingly while excellent wear resistance is achieved as well. To obtain excellent kneading processability and ease of roll processing, aluminum hydroxide is especially preferred.

The nitrogen adsorption specific surface area (BET value) of the inorganic reinforcement agent is 10~60 m²/g. If it is outside such a range, wear resistance and wet grip performance may decrease. The lower limit of the BET value is preferred to be 12 m²/g. In addition, the upper limit of the BET value is preferred to be 50 m²/g, more preferably 40 m²/g, even more preferably 20 m²/g. In the present application, the BET value is measured according to ASTM D3037-81.

The average particle diameter of the inorganic reinforcement agent is preferred to be 1.5 µm or smaller, more preferably 0.69 µm or smaller, even more preferably 0.6 µm or smaller. In addition, the average particle diameter is preferred to be 0.2 µm or greater, more preferably 0.25 µm or greater, even more preferably 0.4 µm or greater If it exceeds 1.5 µm, wear resistance and wet grip performance may decrease, and if it is smaller than 0.2 µm, wear resistance and processability may decrease. The average particle diameter of an inorganic reinforcement agent is a number average particle diameter, and is determined using a transmission electron microscope.

The Mohs hardness of the inorganic reinforcement agent is preferred to be 7 or less, the same as in silica, but more preferably 2~5, to maintain the wear resistance and wet grip performance of a tire and to suppress the metal fatigue of a Banbury mixer or extruder. Mohs hardness is one of the mechanical characteristics of a material, and has been measured in relation to minerals. To measure the hardness of a material (such as aluminum hydroxide), the material is scratched by a standard material, and the Mohs hardness is determined by the presence of scratches.

It is preferred to use an inorganic reinforcement agent which has a Mohs hardness of less than 7 and whose dehydrated reaction product has a Mohs hardness of 8 or greater. For example, aluminum hydroxide has an approximate Mohs hardness of 3 and suppresses abrasion (wear) of a Banbury mixer or a roller. At the same time, aluminum hydroxide is converted to alumina having an approximate Mohs hardness of 9, which is a higher hardness than that of road surfaces, when its surface undergoes dehydration reactions (conversion) caused by vibrations or heat when the tire is running or during kneading procedures. As a result, excellent wear resistance and wet grip performance are achieved. Here, it is not necessary for all the aluminum hydroxide to be converted. If part of the hydroxide is converted, it is sufficient to exhibit scratching effects when the tire is scratched on a road surface. Aluminum hydroxide and alumina are stable with water, bases and acids, and do not inhibit a vulcanization process or facilitate deterioration caused by oxidation. The Mohs hardness of the converted inorganic reinforcement agent is preferred to be 9 or higher, and no particular value is set for the upper limit. The Mohs hardness of a diamond is 10, which is the maximum value.

The initial thermal decomposition temperature (DSC: endothermic reaction temperature) of the inorganic reinforcement agent is preferred to be 160~500°C, more preferably 170~400°C. If it is lower than 160°C, thermal decomposition or reaggregation may progress too far, or it may facilitate the metal fatigue of the container walls or rotor blades of a kneader. The initial thermal decomposition temperature of an inorganic reinforcement agent is obtained by conducting differential scanning calorimetry (DSC). Thermal decomposition includes dehydration reactions.

As for the inorganic reinforcement agent, commercially available products having the above BET value may be used. Also available is a treated product obtained by conducting crushing or the like of an inorganic reinforcement agent to create particles that have the above characteristics. Crushing may be conducted by a known method such as wet crushing or dry crushing (jet mill, current jet mill, counter jet mill, contraplex mill or the like). Alternatively, by a membrane filter often used in medical technology or biotechnology, particles are selected to have a particular BET value, and are then used as an agent to be mixed into the rubber.

The amount of the inorganic reinforcement agent is at least 1 part by mass, preferably at least 2 parts by mass, more preferably at least 3 parts by mass, based on 100 parts by mass of the rubber component. If it is less than 1 part by mass, sufficient wet grip performance may not be achieved. The amount to be combined is 70 parts by mass or less, preferably 60 parts by mass or less, more preferably 55 parts by mass or less. If it exceeds 70 parts by mass, wear resistance deteriorates to a degree at which it is impossible to compensate by combining other materials. In addition, tensile strength may also decrease.

The rubber composition of the present embodiment contains silica and/or carbon black having a BET value in a particular range. Such silica and carbon black may be used alone or in combination thereof.

The BET value of silica is 100 m²/g or greater. By combining silica with a BET value of 100 m²/g or greater, sufficient wear resistance and wet grip performance are both achieved. The BET value of silica is preferred to be 110 m²/g or greater, more preferably 160 m²/g or greater. The BET value of silica is preferred to be 300 m²/g or less, more preferably 250 m²/g or less, even more preferably 200 m²/g or less. If it exceeds 300 m²/g, processability and fuel efficiency may be lowered.

The BET value of the carbon black is 100 m²/g or greater. By combining carbon black having a BET value of 100 m²/g or greater, sufficient wear resistance and wet grip performance are both achieved. The BET value of carbon black is preferred to be 110 m²/g or greater, more preferably 140 m²/g or greater. The BET value of carbon black is preferred to be 300 m²/g or less, more preferably 250 m²/g or less, even more preferably 200 m²/g or less. If it exceeds 300 m²/g, processability and fuel efficiency may be lowered.

The total content of silica and carbon black is preferred to be at least 50 parts by mass, more preferably at least 60 parts by mass, based on 100 parts by mass of the rubber component. If it is less than 50 parts by mass, sufficient wear resistance and wet grip performance may not be achieved. In addition, the total content is preferred to be no greater than 130 parts by mass, more preferably no greater than 110 parts by mass, even more preferably no greater than 100 parts by mass. If it exceeds 130 parts by mass, fuel efficiency may be lowered.

A silane coupling agent may be mixed into the rubber composition of the present embodiment. For example, a compound represented by the formula (1) below is preferably used. By combining a silane coupling agent represented by the formula (1) with a rubber component and silica, silica is dispersed well, and wear resistance and wet grip performance are significantly improved. Also, the silane coupling agent represented by the formula (1) is unlikely to cause rubber scorching, allowing the rubber to be extruded at high temperatures during the production process.

(CₚH₂ₚ₊₁O)₃Si-C_{q}H_{2q}-S-CO-CₖH₂ₖ₊₁ ··· (1)

(in the formula, "p" is a whole number of 1~3, "q" is a whole number of 1~5, and "k" is a whole number of 5~12)

In the formula, "p" is a whole number of 1~3, but 2 is preferred. If "p" is 4 or greater, coupling reactions tend to be slow.

In the formula, "q" is a whole number of 1~5, but 2~4 is preferred, and 3 is more preferred. If "q" is 0 or 6 or greater, it is hard to synthesize.

In the formula, "k" is a whole number of 5~12, but 5~10 is preferred and 6~8 is more preferred, and 7 is even more preferred.

Examples of a silane coupling agent represented by formula (1) above include NXT made by Momentive Performance Materials Co., Ltd. and the like. Silane coupling agents represented by formula (1) above may be used alone or in combination with other silane coupling agents, for example, NXT-Z45 made by Momentive Performance Materials, Si69 or Si75 made by Evonik Degussa GmbH. Based on 100 parts by mass of silica, the content of a silane coupling agent is preferred to be 0.5-20 parts by mass, more preferably 1~10 parts by mass, even more preferably 2~7 parts by mass. If the content is within such a range, effects of the present invention are fully achieved.

The rubber composition of the present embodiment may contain a coumarone-indene resin with a softening point of -20~160°C and/or a terpene resin with a softening point of 100~170°C. By combining a coumarone-indene resin and/or a terpene resin, wear resistance and tensile strength are further improved.

Coumarone-indene resins contain coumarone and indene as monomer components to form the resin skeleton (main chain). Other than coumarone and indene, monomer components to be included in the skeleton are styrene, α-methyl styrene, methyl indene, vinyl toluene or the like.

The softening point of a coumarone-indene resin is -20~160°C. The upper limit is preferred to be 145°C or lower, more preferably 130°C or lower. The lower limit is preferred to be -10°C or higher, more preferably -5°C or higher. If the softening point exceeds 160°C, dispersion of resin in the kneading process is lowered, and fuel efficiency tends to decrease. On the other hand, a softening point of lower than -20°C not only causes production difficulties, but also causes transition of the resin to other material and high volatility, thereby resulting in changes in properties. In the present application, the softening point of a coumarone-indene resin is measured by a ring and ball measurement device specified in JIS K 6220-1: 2001, and is the temperature at which the ball drops.

Examples of terpene resins are terpene resins such as α-pinene resin, β-pinene resin, limonene resin, dipentene resin and β-pinene/limonene resin, aromatic modified terpene resins containing a terpene compound and an aromatic compound, terpene phenolic resins containing a terpene compound and a phenolic compound, hydrogen added terpene resins obtained by adding hydrogen to a terpene resin, and the like. Examples of aromatic compounds used for forming aromatic modified terpene resins are styrene, α-methyl styrene, vinyl toluene, divinyl toluene and the like. In addition, phenolic compounds to make terpene phenolic resins are phenol, bisphenol A, cresol, xylenol and the like.

The softening point of a terpene resin is 100~170°C. The upper limit is preferred to be 165°C or lower, more preferably 160°C or lower. The lower limit is preferred to be 105°C or higher, more preferably 108°C or higher, even more preferably 112°C or higher. If it exceeds 170°C, it is hard to disperse the resin in the kneading process. If it is lower than 100°C, fine dispersion with the NR phase, SBR phase or BR phase tends not to occur. In the present embodiment, the softening point of the terpene resin is measured by the same method as that used for measuring the softening point of the coumarone-indene resin.

Based on 100 parts by mass of the rubber component, the content of the coumarone-indene resin is preferred to be at least 0.5 parts by mass, more preferably at least 1 part by mass, even more preferably at least 2 parts by mass. In addition, the content is preferred to be no greater than 60 parts by mass, more preferably no greater than 50 parts by mass, even more preferably no greater than 45 parts by mass. If it is lower than 0.5 parts by mass, the improvement in wear resistance and tensile strength may be insufficient, and if it exceeds 60 parts by mass, improvement in wear resistance and tensile strength is not made, and fuel efficiency may be lowered.

Based on 100 parts by mass of the rubber component, the content of the terpene resin is at least 1 part by mass, preferably at least 3 parts by mass. In addition, the content is preferred to be no greater than 40 parts by mass, more preferably no greater than 30 parts by mass. If it is lower than 1 part by mass, improvement in wear resistance and tensile strength may be insufficient, and if it exceeds 40 parts by mass, improvement in wear resistance and tensile strength is not made, and fuel efficiency may be lowered.

The rubber composition of the present embodiment usually contains a crosslinking agent such as sulfur, or a hybrid crosslinking agent. Examples of sulfur generally used in the rubber industry are powdered sulfur, precipitated sulfur, colloidal sulfur, insoluble sulfur, highly dispersible sulfur, soluble sulfur and the like. Examples of a hybrid crosslinking agent are commercially available KA9188 and the like.

In the rubber composition of the present embodiment, the total content of sulfur derived from a crosslinking agent is preferred to be at least 0.4 parts by mass, more preferably at least 0.5 parts by mass, even more preferably at least 0.8 parts by mass, based on 100 parts by mass of solid rubber content. In addition, the total sulfur content is preferred to be no greater than 2.0 parts by mass, more preferably no greater than 1.6 parts by mass, even more preferably no greater than 1.4 parts by mass. If it is less than 0.4 parts by mass, the hardness (Hs) after vulcanization is insufficient, and co-crosslinking with an adjacent rubber component may be insufficient. If the content exceeds 2.0 parts by mass, wear resistance may decrease. The total sulfur content derived from a crosslinking agent is the net sulfur amount contained in all the crosslinking agents to be fed into the finish kneading. For example, if an insoluble sulfur (containing oil) is used as a crosslinking agent, the net sulfur amount means the amount excluding the oil component.

In the rubber composition of the present embodiment, the amount of process oil to be provided in addition to the oil contained in the oil-extended rubbers such as the high-molecular-weight oil-extended BR and oil-extended SBR is preferred to be no greater than 14 parts by mass, more preferably no greater than 7 parts by mass, based on 100 parts by mass of the rubber component. It is an option not to add any additional process oil. When the amount of the process oil to be separately added to the rubber component is set at no greater than 14 parts by mass, a predetermined hardness is maintained while enhancing grip performance, wear resistance and tensile strength. Also, a distributed torque is easier to add to fillers and inorganic fillers during a kneading process.

In the rubber composition of the present embodiment, other materials generally used in the tire industry, for example, wax, zinc oxide, antiaging agent, release agent or the like, may also be combined.

The rubber composition of the present embodiment may be produced by using a known method that includes kneading processes such as a base kneading process and finish kneading process. Kneading processes are conducted by kneading the above components by using a kneader. Examples of a kneader are conventionally known kneaders such as a Banbury mixer, mixer, kneader, and open roll.

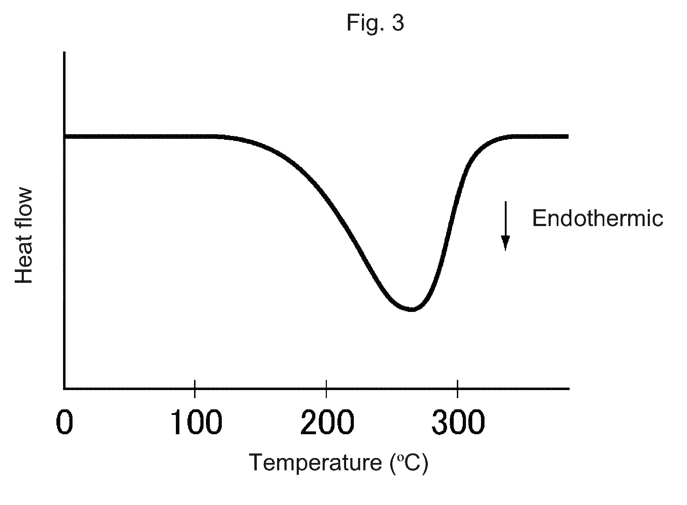

The discharge temperature in the base kneading process, at least in the process for kneading the above rubber component and the inorganic reinforcement agent (for example, if a base kneading process is conducted in one step, the discharge temperature in that step; and if a base kneading process is a later-described divided process, the discharge temperature when the inorganic reinforcement agent is added to be kneaded with the rubber component), is at least 150°C, preferably 155°C or higher, more preferably 160°C or higher, even more preferably 165°C or higher, especially preferably 170°C or higher. For example, the thermal decomposition (dehydration reactions) of aluminum hydroxide has a temperature range shown in FIG. 3; namely, the thermal decomposition temperatures (DSC: endothermic reaction temperatures) of aluminum hydroxide have an endothermic peak of 220~350°C. However, judging from the wet grip performance and wear resistance observed in rubber kneading tests, dehydration reactions with silica as shown in FIG. 1 are thought to occur at approximately 140°C. Therefore, by setting the above discharge temperature, aluminum hydroxide is converted to alumina properly, resulting in the well balanced effects described in (1)~(3) above, and wet grip performance is significantly improved. If the discharge temperature is lower than 150°C, the conversion rate of aluminum hydroxide to alumina is low in the rubber composition, and wet grip performance may decrease. Meanwhile, the upper limit of the discharge temperature is not set at a certain value, and may be adjusted properly within a range that obtains desired properties but does not cause rubber scorching. However, it is preferred to be 190°C or lower, more preferably 185°C or lower.

The base kneading may be conducted in one step to knead the rubber component and the inorganic reinforcement agent, or a base kneading may be divided into the following steps: an X kneading process to knead the rubber component, carbon black, two-thirds of the silica, and two-thirds of the silane coupling agent; a Y kneading process to knead the mixture obtained in the X kneading process, the remaining silica, the remaining silane coupling agent, and other components excluding sulfur and the vulcanization acceleration agent; and a Z kneading process to knead again the mixture obtained in the Y kneading process. In such a divided kneading method, the inorganic reinforcement agent may be added in any of X, Y and X kneading processes.

After the above base kneading, for example, a finish kneading process is conducted to knead the obtained mixture 1 by using the same kneader and adding a vulcanizing agent such as sulfur, a vulcanization acceleration agent and the like (at a discharge temperature of 80~110°C). Then, a vulcanization process is further conducted so that the mixture 2 (unvulcanized rubber composition) undergoes vulcanization reactions at 130~190°C for 5-30 minutes. Accordingly, the rubber composition of the present embodiment is obtained.

The rubber composition related to the present invention produces a rubber product that exhibits wet grip performance, wear resistance and tensile strength that are enhanced and well balanced. The rubber composition of the present embodiment is preferably used for the tread of a pneumatic tire. It is also preferably used for the sole rubber for footwear.

A pneumatic tire related to the present invention is produced through a normal procedure by using the above-described rubber composition. Namely, a rubber composition obtained by combining various additives where applicable is extruded to correspond to the shape of a tread when it is still unvulcanized, molded into a shape using a tire molding machine, and further laminated with other tire members to form an unvulcanized tire. Then, the unvulcanized tire is hot pressed in a vulcanizing machine to obtain a pneumatic tire.

The pneumatic tire related to the present invention is preferred to be used as a tire for compact cars, large passenger cars and large SUVs, and as a heavy duty tire for trucks and buses, as well as a tire for light trucks. Also, pneumatic tire are preferably used to produce summer tires and studless tires for the above vehicles.

### EXAMPLES

The present invention is described in detail according to the following examples.

The following are a list of chemicals used in the examples and comparative examples.

### <butadiene rubber>

BR 1: BUNA CB 29 TDAE, made by LANXESS (an Nd-based BR synthesized using an Nd-based catalyst, cis content: 95.8 mol%, vinyl content: 0.4 mol%, Mw: 760,000, a TDAE oil content: 37.5 parts by mass based on 100 parts by mass of the rubber component)
BR 2: BUNA CB 24 made by LANXESS (a BR synthesized using an Nd-based catalyst, non-oil-extended type, cis content: 97.0 mol%, vinyl content: 0.7 mol%, Mw: 540,000, Tg: 110°C)
BR 3: BR150B made by Ube Industries, Ltd., a Co-based BR synthesized using a Co-based catalyst, cis content: 96.2 mol%, vinyl content: 2.1 mol%, Mw: 430,000, Tg: 108°C)

Physical properties of BR 1~3 are listed in Table 1.

**[Table 1]**

| | oil content / non-oil extended | extender oil | oil content based on 100 parts by mass of rubber component (part by mass) | catalyst for synthesis | cis content (mol%) | vinyl content (mol%) | weight-average molecular weight (Mw) | note |
|---|---|---|---|---|---|---|---|---|
| BR 1 | oil extended | TDAE | 37.5 | Nd | 95.8 | 0.4 | 760,000 | made by LANXESS |
| BR 2 | non-oil extended | - | - | Nd | 97.0 | 0.7 | 540,000 | made by LANXESS |
| BR 3 | non-oil extended | - | - | Co | 96.2 | 2.1 | 430,000 | made by Ube Industries |

### <Styrene-Butadiene Rubber>

SBR 1~4 were prepared as follows.

First, various chemicals used in the procedure are listed below.
emulsifier (1): resin soap made by Harima Chemicals Group, Inc.
emulsifier (2): fatty acid soap made by Wako Pure Chemical Industries, Ltd.
electrolyte: sodium phosphate made by Wako Pure Chemical
styrene: styrene made by Wako Pure Chemical
butadiene: 1,3-butadiene made by Takachiho Chemical Industrial Co., Ltd. molecular weight modifier: tert-dodecylmercaptan made by Wako Pure Chemical
radical initiator: paramenthane hydroperoxide made by NOF Corporation
SFS: sodium formaldehyde sulfoxylate made by Wako Pure Chemical
EDTA: ethylenediaminetetraacetic acid disodium salt made by Wako Pure Chemical
catalyst: ferric sulphate, made by Wako Pure Chemical
polymerization terminator: N,N'-dimethyldithiocarbamate, made by Wako Pure Chemical

### (1) SBR 1

A commercially available oil-extended SBR, Nipol 9548, made by Zeon Corporation was used as SBR 1.

### (2) Preparing SBR 2 (oil-extended silica-modified SBR)

### 2-1 Preparing terminal modifier

Under a nitrogen atmosphere, 20.8 grams of 3-(N,N-dimethylamino)propyl trimethoxysilane (made by Azmax Co., Ltd.) was put into a 250 mL graduated flask, and hexane anhydride (made by Kanto Chemical Co., Inc.) was further added to make a total amount of 250 mL. Accordingly, a terminal modifier was obtained.

### 2-2 Preparing SBR 2

In a fully nitrogen-substituted 30L pressure-resistant vessel, 18 L of n-hexane, 800 grams of styrene (made by Kanto Chemical), 1200 grams of butadiene, and 1.1 mmol of tetramethylethylenediamine were provided, and the temperature was raised to 40°C. Next, 1.8 mL of 1.6 M butyl lithium (made by Kanto Chemical) was added, the temperature was raised to 50°C, and the mixture was stirred for 3 hours. Then, 4.1 mL of the terminal modifier was added, and the mixture was stirred for 30 minutes. After 15 mL of methanol and 0.1 grams of 2,6-tert-butyl-p-cresol were added to the reaction mixture and then 1200 grams of a TDAE was further added, and the mixture was stirred for 10 minutes. Then, a steam-stripping treatment was conducted to collect the aggregate from the polymer solution. After the obtained aggregate was vacuum-dried for 24 hours, SBR 2 was obtained.

### (3) Preparing SBR 3 (non-oil-extended silica modified SBR)

In a fully nitrogen-substituted 30L pressure-resistant vessel, 18 L of n-hexane, 740 grams of styrene (made by Kanto Chemical), 1260 grams of butadiene, and 17 mmol of tetramethylethylenediamine were provided, and the temperature was raised to 40°C. Next, 10.5 mL of butyl lithium was added, the temperature was raised to 50°C, and the mixture was stirred for 3 hours. Next, after 3.5 mL of 0.4 mol/L silicon tetrachloride/hexane solution was added, the mixture was stirred for 30 minutes. Then, 30 mL of the terminal modifier prepared at the time of producing SBR 2 was added, and the mixture was further stirred for 30 minutes. In the reaction mixture, 2 mL of methanol (made by Kanto Chemical) containing 0.2 grams of dissolved 2,6-tert-butyl-p-cresol (made by Ouchi Shinko Chemical Industrial Co., Ltd. ) was added. The reaction mixture was put into a stainless steel vessel containing 18 L of methanol to collect an aggregate. The aggregate was vacuum dried for 24 hours and SBR 3 was obtained.

### (4) Preparing SBR 4 (non-oil-extended silica modified SBR)

In a fully nitrogen-substituted 30L pressure-resistant vessel, 18 L of n-hexane, 540 grams of styrene (made by Kanto Chemical), 1460 grams of butadiene, and 17 mmol of tetramethylethylenediamine were provided, and the temperature was raised to 40°C. Next, 10.5 mL of butyl lithium was added, the temperature was raised to 50°C, and the mixture was stirred for 3 hours. Next, after 3.5 mL of 0.4 mol/L silicon tetrachloride/hexane solution was added, the mixture was stirred for 30 minutes. Then, 30 mL of the terminal modifier prepared at the time of producing SBR 2 was added, and the mixture was further stirred for 30 minutes. In the reaction mixture, 2 mL of methanol (made by Kanto Chemical) containing 0.2 grams of dissolved 2,6-tert-butyl-p-cresol (made by Ouchi Shinko Chemical) was added. The reaction mixture was put into a stainless steel vessel containing 18 L of methanol to collect an aggregate. The aggregate was vacuum dried for 24 hours and SBR 4 was obtained.

Physical properties of SBR 1~4 are listed in Table 2.

The weight-average molecular weight (Mw) of each SBR was measured by gel-permeation chromatography (GPC) under the following conditions.
GPC device: HLC-8220 made by Toso Co., Ltd.
separation column: HM-H (2 columns connected in series) made by Toso
temperature: 40°C
carrier: tetrahydrofuran
flow rate: 0.6 mL/min.
feed amount: 5 µm
detector: refractive index detector
standard molecular weight: standard styrene

**[Table 2]**

| | oil extended / non-oil extended | extended oil | oil content based on 100 parts by mass of rubber component (part by mass) | type of SBR | bound styrene content (mass%) | vinyl content (mol%) | weight-average molecular weight (Mw) |
|---|---|---|---|---|---|---|---|
| SBR 1 | oil extended | TDAE | 37.5 | E-SBR | 35 | 18 | 1,090,000 |
| SBR 2 | oil extended | TDAE | 37.5 | silica-modified SBR | 41 | 40 | 1,200,000 |
| SBR 3 | non-oil extended | - | - | silica-modified SBR | 37 | 55 | 930,000 |
| SBR 4 | non-oil extended | - | - | silica-modified SBR | 28 | 60 | 720,000 |

### <Inorganic Reinforcement Agent>

aluminum hydroxide 1: ATH#B (BET value: 15 m²/g, average particle diameter: 0.6 µm) made by Sumitomo Chemical Co., Ltd.
aluminum hydroxide 2: crushed dry product of ATH#B (BET value: 34 m²/g, average particle diameter: 0.4 µm)
aluminum hydroxide 3: crushed dry product of ATH#B (BET value: 45 m²/g, average particle diameter: 0.25 µm)
aluminum hydroxide 4: crushed dry product of ATH#B (BET value: 55 m²/g, average particle diameter: 0.21 µm)
aluminum hydroxide 5: crushed dry product of ATH#B (BET value: 61 m²/g, average particle diameter: 0.15 µm)
aluminum hydroxide 6: ATH#C (BET value: 7.0 m²/g, average particle diameter: 0.8 µm) made by Sumitomo Chemical
aluminum hydroxide 7: C-301N (BET value: 4.0 m²/g, average particle diameter: 1.0 µm) made by Sumitomo Chemical
magnesium hydroxide: Ecomag PZ-1 (BET value: 6.0 m²/g, average particle diameter: approx. 1.0 µm) made by Tateho Chemical Industries, Co., Ltd.
hard clay: hard crown dry classification No. 80 (BET value: 8 m²/g, average particle diameter: 0.65 µm) made by Shiraishi Calcium Kaisha, Ltd.

### <Silica or Carbon Black>

carbon black 1: HP160 (BET value: 153 m²/g) made by Orion Engineered Carbons
carbon black 2: HP180 (BET value: 175 m²/g) made by Orion Engineered Carbons
carbon black 3: Show Black N220 (BET value: 111 m²/g) made by Cabot Japan
carbon black 4: Show Black N330 (BET value: 78 m²/g) made by Cabot Japan
silica 1: ULTRASIL U9000Gr (BET value: 235 m²/g) made by Evonik Industries
silica 2: ULTRASIL VN3 (BET value: 175 m²/g) made by Evonik Industries
silica 3: Z115Gr (BET value: 115 m²/g) made by Rhodia
silica 4: Z1085 (BET value: 80 m²/g) made by Rhodia

### <Resins>

Coumarone-indene resin: NOVARES C10 (liquid coumarone-indene resin, softening point: 10°C) made by Ruetgers Chemicals
terpene resin 1: YS Polyster T115 (terpene phenolic resin, softening point: 115°C) made by Yasuhara Chemical Co., Ltd.
terpene resin 2: YS Polyster TO125 (aromatic terpene resin, softening point: 125°C) made by Yasuhara Chemical
terpene resin 3: TR7125 (polyterpene, softening point: 125°C, Tg: 73°C) made by Arizona Chemical Company
styrene resin: Sylvares SA85 (softening point: 85°C, Tg: 43°C) made by Arizona Chemical

### <Oils>

process oil: VivaTec400 (TDAE oil) made by H&R Group

Tables 3 and 4 also show oil components derived from oil-extended BR or oil-extended SBR.

### <Additives>

wax: Ozoace0355, made by Nippon Seiro Co., Ltd.
antiaging agent 1: Antigen 6C (N-(1,3-Dimethylbutyl)-N'-phenyl-p-phenylenediamine) made by Sumitomo Chemical
antiaging agent 2: NOCRAC 224 (2,2,4-trimethyl-1,2-dihydroquinoline polymer) made by Ouchi Shinko Chemical Industrial Co., Ltd.
stearic acid: Tsubaki made by NOF Corp.
zinc oxide: Ginrei R (BET value: 4 m²/g, average particle diameter: 0.29 µm) made by Toho Zinc Co., Ltd.
silane coupling agent 1: Si69 made by Evonik
silane coupling agent 2: Si75 made by Evonik
silane coupling agent 3: NXT made by Momentive Performance Materials (a compound represented by formula (1) above, where p=2, q=3, k=7)

### <Vulcanizing agents or the like>

sulfur: HK-200-5 (powdered sulfur containing 5 mass% of oil) made by Hosoi Chemical Industry Co.,Ltd.
vulcanization accelerator 1: NOCCELER NS-G (N-tert-butyl-2-benzothiazolylsulfenamide) made by Ouchi Shinko Chemical
vulcanization accelerator 2: NOCCELER D (1,3-diphenylguanidine) made by Ouchi Shinko Chemical

### (Examples and Comparative Examples)

According to the combination formulas and kneading conditions listed in Tables 3 and 4, and using a Banbury mixer, the following were kneaded for 5 minutes (X kneading process): rubber component, all of the inorganic reinforcement agent, all of the carbon black, two-thirds of the silica, and two-thirds of the silane coupling agent. Aluminum hydroxide was added to the X kneading process.

Next, the mixture obtained by the X kneading process was mixed with the remaining silica and remaining silane coupling agent and kneaded at a predetermined temperature. Then, other components excluding sulfur and vulcanization accelerators were added and further kneaded for 5 minutes (Y kneading process).

Discharge temperatures for X and Y kneading processes are listed in the lower lines of Tables 3 and 4.

Next, sulfur and vulcanization accelerators were added to the mixture, and finish kneading was conducted for 4 minutes using an open roller. Accordingly, unvulcanized rubber compositions were obtained. During that time, the maximum rubber temperature was set at 95°C.

The unvulcanized rubber compositions were press vulcanized at 170°C for 12 minutes, and vulcanized rubber compositions were obtained.

Also, the unvulcanized rubber compositions were molded into a tread shape, which was laminated with other tire members on a tire molding machine, and press vulcanized at 170°C for 12 minutes. Accordingly, test tires (tire size: 245/40R18) were each obtained.

The following evaluations were conducted on the unvulcanized rubber compositions and test tires. The evaluation results are shown in Tables 3 and 4.

### (Wet Grip Performance)

The above test tires were mounted on a domestic FR car of 2000 cc displacement. The car was driven 10 circuits on a wet asphalt road of a test course. During that time, the test driver evaluated steering stability, and the results are shown in indices based on the result of Comparative Example 1 being set at 100. The greater the index value is, the more excellent is the wet grip performance. An index of 110 or greater indicates excellent wet grip performance.

### (Wear Resistance)

The above test tires were mounted on a domestic FR car of 2000 cc displacement. The car was driven on a dry asphalt road of a test course. The remaining groove depth of the tire tread rubber was measured (8.0 mm on a new tire), and the result was evaluated as wear resistance. The deeper the remaining groove is, the better is the wear resistance. The results are shown in indices based on the remaining groove depth of Comparative Example 1 being set at 100. The greater the index value is, the better is the wear resistance.

### (Tensile Strength)

Using No. 3 dumb-bell test pieces made of vulcanized rubber composition, tensile tests were conducted at 25°C according to JIS K-6251 "Rubber, vulcanized or thermoplastics - Determination of tensile stress-strain properties" to measure elongation at break (EB) (%). Based on the EB (%) of Comparative Example 1 being set at 100, the results were shown in indices. The greater the EB value is, the more excellent is the tensile strength.

### (Total Evaluation)

As for the total evaluation, average values were calculated from the indices obtained in the above testing on wet grip performance, wear resistance and tensile strength.

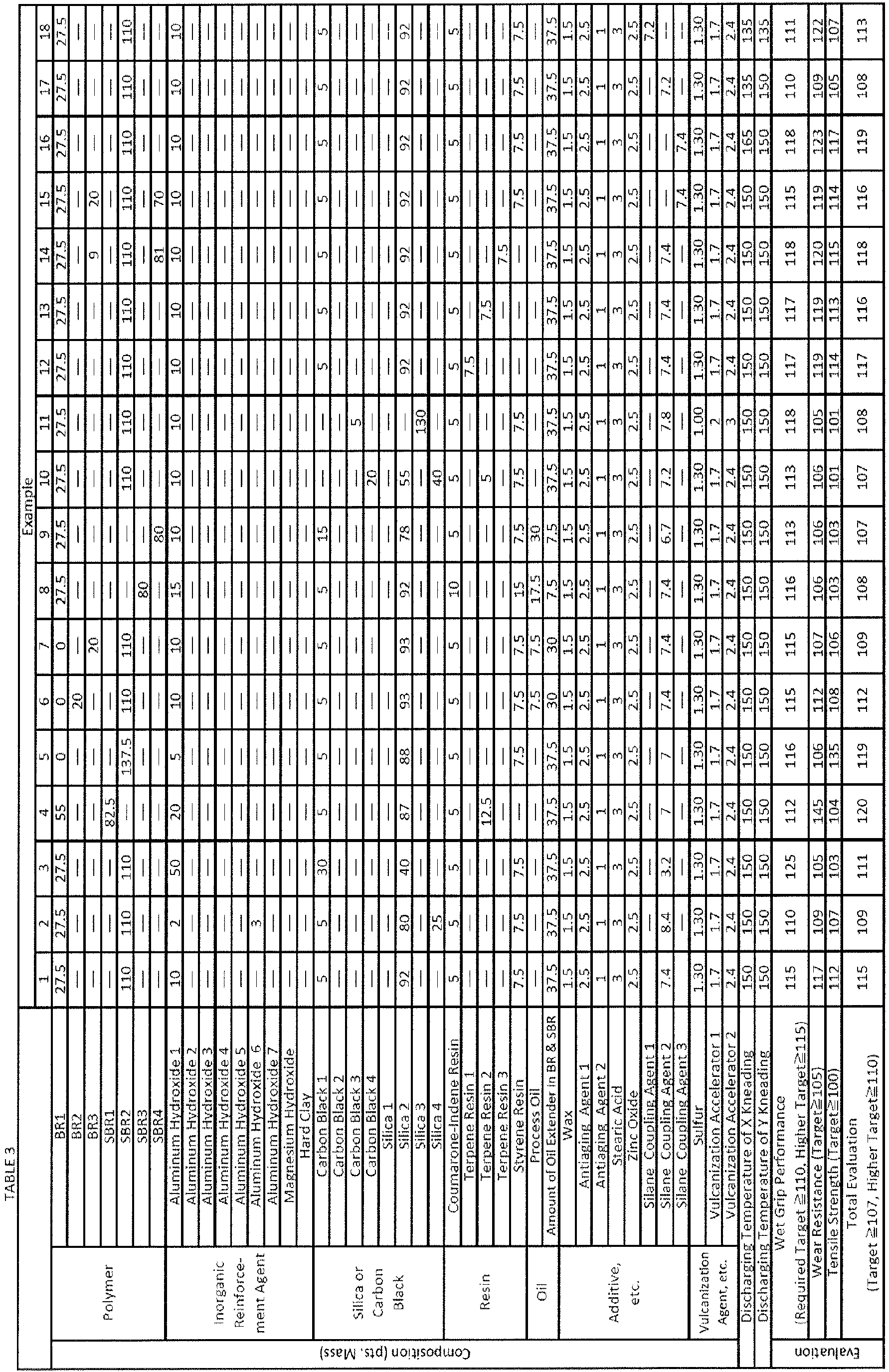

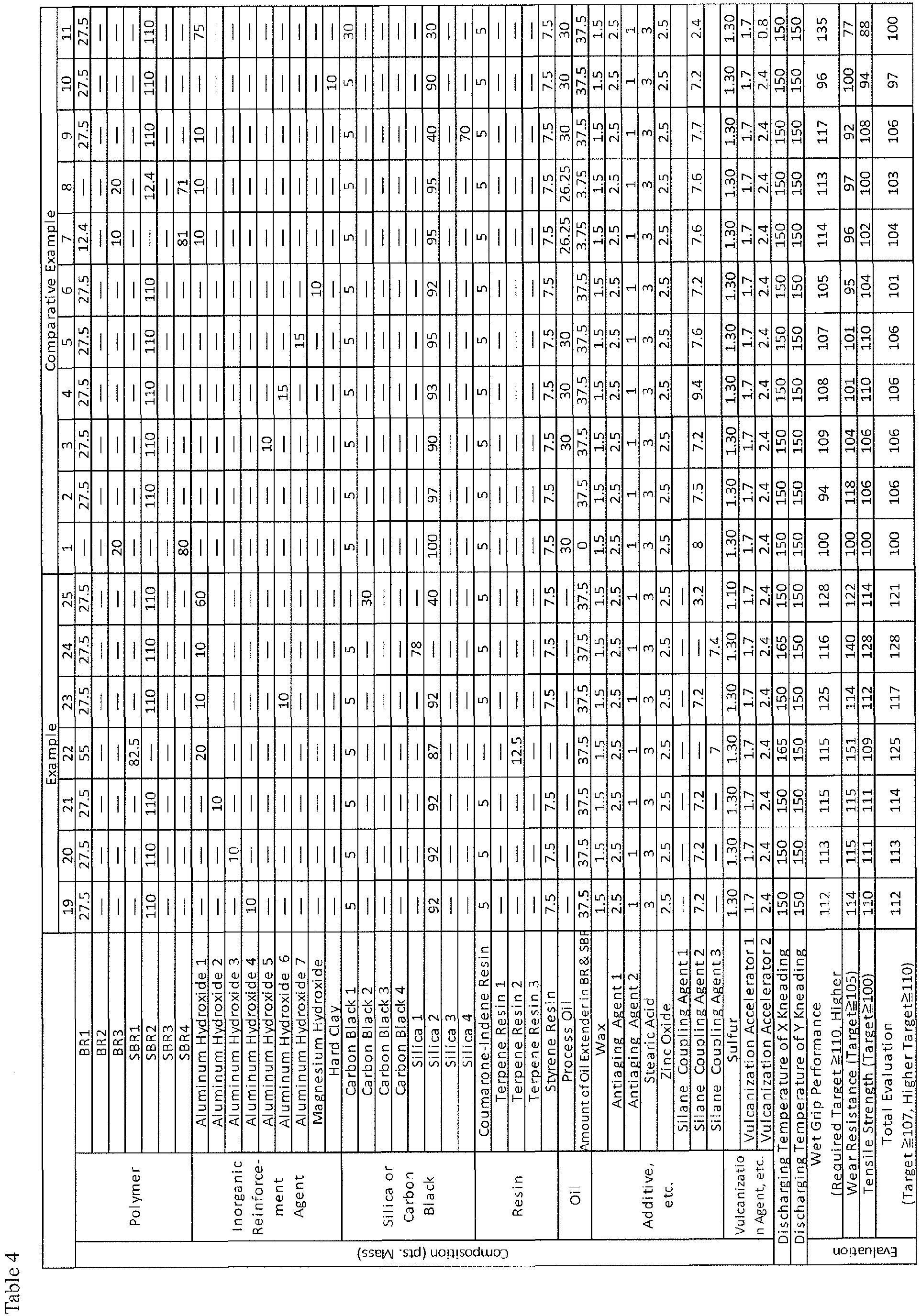

From the evaluation results in Tables 3 and 4, it was found that significantly well balanced improvements were made on wet grip performance, wear resistance and tensile strength in the examples prepared respectively by combining a particular rubber component, a particular inorganic reinforcement agent having a predetermined nitrogen adsorption specific surface area, and silica and/or carbon black having a predetermined nitrogen adsorption specific surface area.

[Subject Matter] To provide a rubber composition capable of making well- balanced improvements to wet grip performance, wear resistance and tensile strength, and to provide a pneumatic tire having a tread produced by using the rubber composition.

[Solution(s)] A rubber composition, containing a rubber component made of an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10~60 mass% and a weight-average molecular weight of 800,000 or greater; an inorganic reinforcement agent represented by the formula below and having a nitrogen adsorption specific surface area of 10~60 m²/g or greater; and silica having a nitrogen adsorption specific surface area of 100 m²/g or greater and/or carbon black having a nitrogen adsorption specific surface area of 100 m²/g or greater. To produce such a rubber composition, the oil-extended butadiene rubber is synthesized using a rare-earth element-based catalyst, the total content of the oil-extended butadiene rubber and the styrene-butadiene rubber is 10-100 mass% of the rubber component, and based on 100 parts by mass of the rubber component, the content of the inorganic reinforcement agent is 1~70 parts by mass and the total content of the silica and carbon black is at least 50 parts by mass.

mM·SiO_{y}·zH₂O

(in the formula, "M" represents at least one metal selected from the group consisting of Al, Mg, Ti, Ca, Zr, an oxide of the metal thereof and a hydroxide of the metal thereof, "m" is a whole number of 1~5, "x" is a whole number of on 0~10, "y" is a whole number of 2~5, and "z" is a whole number of 0~10)

## Claims

1. A rubber composition, comprising:
a rubber component containing an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10~60 mass% and a weight-average molecular weight of 800,000 or greater;
an inorganic reinforcement agent represented by the formula below and having a nitrogen adsorption specific surface area of 10~60 m²/g or greater; and
silica having a nitrogen adsorption specific surface area of 100 m²/g or greater and/or carbon black having a nitrogen adsorption specific surface area of 100 m²/g or greater,
wherein the oil-extended butadiene rubber is synthesized using a rare-earth element-based catalyst,
the total content of the oil butadiene rubber and the styrene-butadiene rubber is 10~100 mass% of the rubber component,
based on 100 parts by mass of the rubber component, the content of the inorganic reinforcement agent is 1~70 parts by mass, and the total content of the silica and carbon black is at least 50 parts by mass.
mM·xSiO_{y}·zH₂O
(in the formula, "M" represents at least one metal selected from the group consisting of Al, Mg, Ti, Ca, Zr, an oxide of the metal thereof and a hydroxide of the metal thereof, "m" is a whole number of 1~5, "x" is a whole number of 0~10, "y" is a whole number of 2~5, and "z" is a whole number of 0~10)

2. The rubber composition according to Claim 1, wherein the inorganic reinforcement agent is aluminum hydroxide.

3. The rubber composition according to Claim 2, wherein the rubber composition is obtained by kneading at least the rubber component and the aluminum hydroxide at a discharge temperature of 150°C or higher.

4. The rubber composition according to any of Claims 1~3, wherein the weight-average molecular weight of the oil-extended butadiene rubber is 700,000 or greater, and/or the weight-average molecular weight of the styrene-butadiene rubber is 1,000,000 or greater.

5. The rubber composition according to any of Claims 1~4, wherein the nitrogen adsorption specific surface area of the silica is 160 m²/g or greater and the nitrogen adsorption specific surface area of the carbon black is 140 m²/g or greater, and the total content of the silica and the carbon black is at least 60 parts by mass based on 100 parts by mass of the rubber component.

6. The rubber composition according to any of Claims 1~5, further comprising process oil at 14 parts by mass or less based on 100 parts by mass of the rubber component.

7. The rubber composition according to any of Claims 1~6, wherein the rubber composition is for producing a tire tread.

8. A pneumatic tire comprising a tread produced by using the rubber composition according to any of Claims 1~6.

## Patentansprüche

1. Kautschukzusammensetzung, die umfasst:
einen Kautschukbestandteil, der einen ölverstreckten Butadienkautschuk mit einem cis-Anteil von 95 Mol% oder größer, einem Vinylanteil von 1,2 Mol% oder weniger und einem gewichtsgemittelten Molekulargewicht von 530.000 oder größer, und/oder einen Styrol-Butadien-Kautschuk mit einem gebundenen Styrolanteil von 10-60 Masse-% und einem gewichtsgemittelten Molekulargewicht von 800.000 oder größer enthält;
ein anorganisches Verstärkungsmittel, das durch die nachfolgende Formel dargestellt ist und eine Stickstoffadsorption-spezifische Oberfläche von 10-60 m²/g oder größer aufweist; und
Siliciumoxid mit einer Stickstoffadsorption-spezifischen Oberfläche von 100 m²/g oder größer und/oder Kohleschwarz mit einer Stickstoffadsorption-spezifischen Oberfläche von 100 m²/g oder größer,
wobei der ölverstreckte Butadienkautschuk unter Verwendung eines Seltenerdelement-basierten Katalysators synthetisiert ist,
der Gesamtgehalt des Öl-Butadienkautschuks und des Styrol-Butadien-Kautschuks 10-100 Masse% des Kautschukbestandteils ist,
basierend auf 100 Masseteilen des Kautschukbestandteils, der Gehalt des anorganischen Verstärkungsmittels 1-70 Masseteile beträgt und der Gesamtgehalt des Siliciumoxids und des Kohleschwarz zumindest 50 Masseteile beträgt.
mM·xSiO_{y}·zH₂O
(in der Formel stellt "M" zumindest ein Metall ausgewählt aus der Gruppe bestehend aus Al, Mg, Ti, Ca, Zr und eines Oxids des Metalls und eines Hydroxids des Metalls dar, "m" ist eine ganze Zahl von 1-5, "x" ist eine ganze Zahl von 0-10, "y" ist eine ganze Zahl von 2-5, und "z" ist eine ganze Zahl von 0-10)

2. Kautschukzusammensetzung nach Anspruch 1, wobei das anorganische Verstärkungsmittel Aluminiumhydroxid ist.

3. Kautschukzusammensetzung nach Anspruch 2, wobei die Kautschukzusammensetzung durch Kneten zumindest des Kautschukbestandteils und des Aluminiumhydroxids bei einer Auslasstemperatur von 150°C oder höher erhalten ist.

4. Kautschukzusammensetzung nach einem der Ansprüche 1-3, wobei das gewichtsgemittelte Molekulargewicht des ölverstreckten Butadienkautschuks 700.000 oder größer ist, und/oder das gewichtsgemittelte Molekulargewicht des Styrol-Butadien-Kautschuks 1.000.000 oder größer ist.

5. Kautschukzusammensetzung nach einem der Ansprüche 1-4, wobei die Stickstoffadsorption-spezifische Oberfläche des Siliciumoxids 160 m²/g oder größer ist und die Stickstoffadsorption-spezifische Oberfläche des Kohleschwarz 140 m²/g oder größer ist, und der Gesamtgehalt des Siliciumoxids und des Kohleschwarz zumindest 60 Masseteile basierend auf 100 Masseteilen des Kautschukbestandteils ist.

6. Kautschukzusammensetzung nach einem der Ansprüche 1-5, die ferner ein Prozessöl mit 14 Masseteilen oder weniger basierend auf 100 Masseteilen des Kautschukbestandteils enthält.

7. Kautschukzusammensetzung nach einem der Ansprüche 1-6, wobei die Kautschukzusammensetzung zum Herstellen einer Reifenlauffläche ist.

8. Pneumatischer Reifen, der eine Lauffläche umfasst, die unter Verwendung der Kautschukzusammensetzung nach einem der Ansprüche 1-6 hergestellt ist.

## Revendications

1. Composition de caoutchouc, comprenant :
un composant de caoutchouc contenant un caoutchouc de butadiène étendu à l'huile ayant une teneur en cis de 95 % en mol ou plus, une teneur en vinyle de 1,2 % en mol ou moins et un poids moléculaire moyen en poids de 530 000 ou plus, et/ou un caoutchouc de styrène-butadiène ayant une teneur en styrène lié de 10 à 60 % en masse et un poids moléculaire moyen en poids de 800 000 ou plus ;
un agent de renforcement inorganique représenté par la formule ci-dessous et ayant une surface spécifique d'adsorption d'azote de 10 à 60 m²/g ou plus ; et
de la silice ayant une surface spécifique d'adsorption d'azote de 100 m²/g ou plus et/ou du noir de carbone ayant une surface spécifique d'adsorption d'azote de 100 m²/g ou plus,
dans laquelle le caoutchouc de butadiène étendu à l'huile est synthétisé à l'aide d'un catalyseur à base de terres rares,
la teneur totale du caoutchouc de butadiène étendu à l'huile et du caoutchouc de styrène-butadiène est de 10 à 100 % en masse du composant de caoutchouc,
sur la base de 100 parties en masse du composant de caoutchouc, la teneur de l'agent de renforcement inorganique est de 1 à 70 parties en masse, et la teneur totale de la silice et du noir de carbone est d'au moins 50 parties en masse.
mMx•SiO_{y}•zH₂O
(dans la formule, « M » représente au moins un métal choisi dans le groupe constitué de Al, Mg, Ti, Ca, Zr, un oxyde du métal de ceux-ci et un hydroxyde du métal de ceux-ci, « m » est un nombre entier de 1 à 5, « x » est un nombre entier de 0 à 10, « y » est un nombre entier de 2 à 5, et « z » est un nombre entier de 0 à 10).

2. Composition de caoutchouc selon la revendication 1, dans laquelle l'agent de renforcement inorganique est l'hydroxyde d'aluminium.

3. Composition de caoutchouc selon la revendication 2, laquelle composition de caoutchouc est obtenue en malaxant au moins le composant de caoutchouc et l'hydroxyde d'aluminium à une température de décharge supérieure ou égale à 150 °C.

4. Composition de caoutchouc selon l'une quelconque des revendications 1 à 3, dans laquelle le poids moléculaire moyen en poids du caoutchouc de butadiène étendu à l'huile est de 700 000 ou plus, et/ou le poids moléculaire moyen en poids du caoutchouc de styrène-butadiène est de 1 000 000 ou plus.

5. Composition de caoutchouc selon l'une quelconque des revendications 1 à 4, dans laquelle la surface spécifique d'adsorption d'azote de la silice est de 160 m²/g ou plus et la surface spécifique d'adsorption d'azote du noir de carbone est de 140 m²/g ou plus, et la teneur totale de la silice et du noir de carbone est d'au moins 60 parties en masse sur la base de 100 parties en masse du composant de caoutchouc.

6. Composition de caoutchouc selon l'une quelconque des revendications 1 à 5, comprenant en outre une huile à usiner à raison de 14 parties en masse ou moins sur la base de 100 parties en masse du composant de caoutchouc.

7. Composition de caoutchouc selon l'une quelconque des revendications 1 à 6, laquelle composition de caoutchouc est destinée à la production d'une bande de roulement.

8. Pneu comprenant une bande produite à l'aide de la composition de caoutchouc selon l'une quelconque des revendications 1 à 6.
